# EUROPÄISCHE PATENTSCHRIFT

(11) **EP 2 468 165 B1**
(45) Veröffentlichungstag und Bekanntmachung des Hinweises auf die Patenterteilung: **25.05.2016**
(21) Anmeldenummer: 10401220.8
(22) Anmeldetag: 21.12.2010
(51) Int. Cl.: A47L 9/28, H02P 1/00

(54) **Staubsauger und Verfahren zum Betreiben des Staubsaugers**
Vacuum cleaner and method for operating same
Aspirateur et procédé destiné au fonctionnement de l'aspirateur

(43) Veröffentlichungstag der Anmeldung: 27.06.2012
(73) Patentinhaber: Miele & Cie. KG, 33332 Gütersloh (DE)
(72) Erfinder: Gerhards, Manfred, 53879 Euskirchen (DE); Rode, Dr., Peter, 53881 Euskirchen (DE)

(56) Entgegenhaltungen:
- DE-A1-102008 010 068
- US-A- 5 881 430

## Beschreibung

Die Erfindung betrifft einen Staubsauger mit einem Antriebsaggregat zur Erzeugung eines Saugluftstroms, mit einem Saugvorsatz, mit einer zwischen dem Saugvorsatz und dem Antriebsaggregat angeordneten Abscheidevorrichtung, und mit einer Regeleinrichtung, welche die Aufnahmeleistung des Antriebsaggregats als Stellgröße beeinflusst.

Herkömmliche Staubsauger werden mit einem gesteuerten Antriebsaggregat betrieben. Bei dem Antriebsaggregat handelt es sich in der Regel um den Motor eines Sauggebläses. Dabei wird für den Motor entweder fest oder vom Bediener mittels einer Wahleinrichtung einstellbar eine Aufnahmeleistung für das Antriebsaggregat vorgegeben und diese über einen Spannungswert beispielsweise mittels Phasenanschnittsteuerung eingestellt. Die eingestellte Aufnahmeleistung ergibt sich dann für einen konkreten Arbeitspunkt auf der Volumenstrom-Unterdruck-Kennlinie. Sie ändert sich, wenn sich Unterdruck oder Volumenstrom aufgrund der Arbeitsbedingungen ändern. Gründe hierfür können unterschiedliche Bodenbeläge oder ein verringerter Luftdurchsatz bei gefüllter Abscheidevorrichtung sein, insbesondere bei einem gefüllten Staubbeutel.

Um zu verhindern, dass sich bei gefülltem Staubbeutel der Volumenstrom verringert, sind Staubsauger mit Volumenstrom-Regelung bekannt. Bei sehr dichten Bodenbelägen verringert sich der Luftdurchsatz rapide, der Volumenstrom ist deshalb nur sehr schlecht auszuregeln.

In der DE 10 2008 010 068 A1 ist ein Staubsauger mit einer Unterdruck-Regelung offenbart. Die Unterdruck-Regelung führt der Motor-/Gebläseeinheit nur so viel an elektrischer Leistung zu, dass der von einem ersten Sensor an der Staubabscheideeinheit erfasste Unterdruck auf einen vorgegebenen Wert gehalten wird und gleichzeitig der von einem zweiten Sensor an der Saugdüse erfasste Unterdruck unterhalb eines vorgegebenen Wertes gehalten wird. Diese Regeleinrichtung gewährleistet nicht, dass die an der Saugdüse vorherrschende Saugleistung auf einen vorgegebenen Saugleistungswert gehalten wird.

In der DE 10 2007 057 589 A1 ist für einen Staubsauger eine Volumenstrom-Regelung mit einer überlagerten Schiebkraft-Regelung beschrieben. Die Regeleinrichtung greift dann wahlweise auf einen ersten Drucksensor im Bereich der Bodendüse oder auf einen zweiten Drucksensor zwischen Staubbeutelaufnahmeeinrichtung und Motor zu.

Für den Benutzer eines Staubsaugers ist zwar wichtig, die notwendige Schiebekraft für die Bodendüse zu begrenzen. Wichtiger kann es aber sein, dass die am Saugvorsatz herrschende Saugleistung möglichst konstant bleibt. Um auch bei maximal gefülltem Staubbeutel noch eine ausreichende Saugleistung erzielen zu können, muss die aufgenommene Leistung am Antriebsaggregat nämlich hoch gewählt werden. Diese hohe Aufnahmeleistung ist jedoch bei leerem Staubbeutel im Allgemeinen überdimensioniert und kontraproduktiv, da sie mit hohen Unterdrücken arbeitet und entsprechende Nachteile bezüglich des Energieverbrauchs nach sich zieht.

Der Erfindung stellt sich somit das Problem, bei einem Staubsauger der eingangs genannten Art die vorgenannten Nachteile zu beseitigen und dem Benutzer eine komfortable und energiesparende Benutzung zu ermöglichen.

Erfindungsgemäß wird dieses Problem durch einen Staubsauger mit den Merkmalen des unabhängigen Patentanspruchs 1 gelöst. Vorteilhafte Ausgestaltungen und Weiterbildungen der Erfindung ergeben sich aus den nachfolgenden Unteransprüchen.

Die mit der Erfindung erreichbaren Vorteile ergeben sich daraus, dass mit der Regeleinrichtung die Aufnahmeleistung des Antriebsaggregats in der Art beeinflussbar ist, dass die am Saugvorsatz vorherrschende Saugleistung als Regelgröße dient und auf einen vorgegebenen Saugleistungswert regelbar ist. Hierdurch ist zumindest in einem Arbeitsbereich ein gewünschter, insbesondere ein konstanter Saugleistungswert erzielbar. Der Benutzer erfährt somit keinen Saugleistungsverlust bei sich füllender Abscheidevorrichtung oder bei Änderung der Arbeitsbedingungen.

Es ist insbesondere vorteilhaft, wenn der Saugleistungswert in seiner Höhe vom Bediener durch eine Eingabevorrichtung beeinflussbar ist. Hierdurch ist eine individuelle Anpassung an unterschiedliche Arbeitsbedingungen möglich. Es ist dann auch vorteilhaft, wenn der maximal einstellbare Saugleistungswert einem Wert entspricht, welcher sich ungeregelt bei maximal gefüllter Abscheidevorrichtung einstellen würde. Hierdurch trifft der Benutzer auch kurz vor der vollständigen Füllung eines Staubbeutels unveränderte Arbeitsbedingungen an.

In vorteilhafter Weise ist die am Saugvorsatz herrschende Saugleistung durch zwei Sensoren erfassbar, wobei strömungsmäßig der erste Sensor vor der Abscheidevorrichtung und der zweite Sensor hinter der Abscheidevorrichtung angeordnet sind. Hierdurch ergibt sich ein einfacher Aufbau. Außerdem kann der Sensor dann an einer Stelle im Übergang zwischen einem Staubsammelraum und einem Gebläseraum angeordnet werden, wo ein guter Luftdurchsatz herrscht und demzufolge gut auswertbare Sensorsignale zu erwarten sind. Prinzipiell ist aber auch eine Anordnung des zweiten Sensors vor der Abscheidevorrichtung, beispielsweise im Saugschlauch oder an dessen Ankoppelstelle möglich. Es werden zweckmäßiger Weise Differenzdrucksensoren verwendet. Es ist insbesondere vorteilhaft, wenn der erste Sensor im Bereich eines die Abscheidevorrichtung aufnehmenden Gehäuses angeordnet ist, wobei eine der Regeleinrichtung zugeordnete Kompensationseinrichtung den Druckabfall zwischen dem Saugvorsatz und dem Einbauort des ersten Sensors kompensiert. Durch die Anordnung des ersten Sensors im Gehäuse des Staubsaugers sind die Signalleitungen zwischen der Regeleinrichtung (im Allgemeinen in der Steuerungselektronik integriert) und dem Sensor kurz, es entfällt insbesondere die Notwendigkeit, Signalleitungen durch eine eventuell verwendete Saugschlauch-Saugrohr-Kombination bis in den Bereich des Saugvorsatzes zu führen. Die Kompensation des Druckabfalls zwischen dem Saugvorsatz und dem Einbauort des ersten Sensors ist vorteilhaft, weil sie eine Verfälschung der Regelgröße verhindert.

Die Verwendung der erfindungsgemäßen Regelung ist insbesondere dann sinnvoll, wenn als Abscheidevorrichtung ein Staubbeutel verwendet wird.

Ein Ausführungsbeispiel der Erfindung ist in den Zeichnungen rein schematisch dargestellt und wird nachfolgend näher beschrieben. Es zeigt
- Figur 1: eine schematische Darstellung eines Längsschnitts eines Staubsaugers,
- Figur 2: ein Bedienfeld eines Staubsaugers gemäß Figur 1,
- Figur 3: eine Schemaskizze der Regeleinrichtung und der zugehörigen Funktionsbauteile
- Figur 4, 5: Kennliniendiagramme.

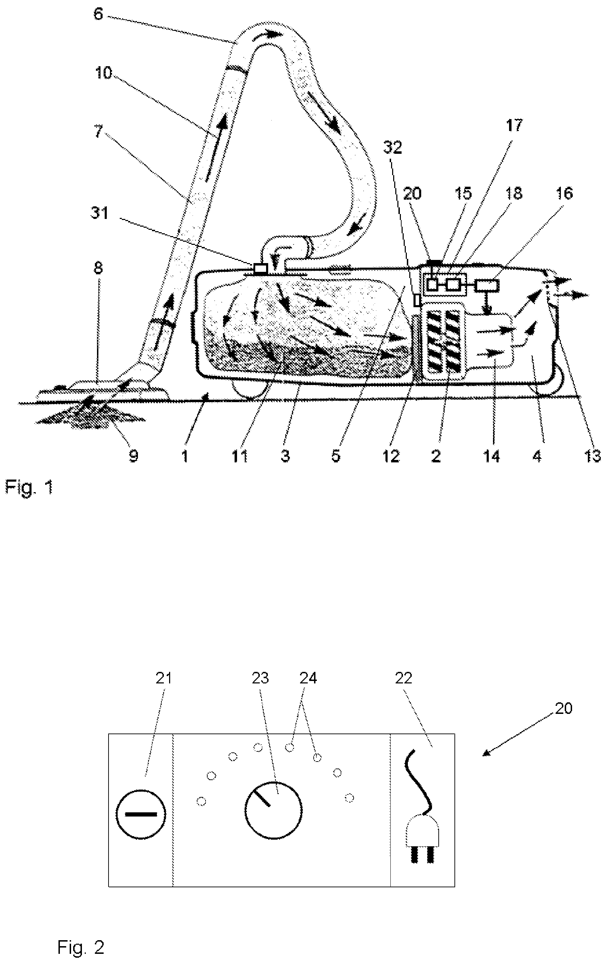

Figur 1 zeigt schematisch einen Staubsauger 1 in einer Ausführungsform als Bodenstaubsauger. Die Erfindung eignet sich jedoch grundsätzlich für jeden Staubsauger 1, der mit einem Antriebsaggregat zur Erzeugung eines Saugluftstroms ausgestattet ist. Als weitere, nicht dargestellte Beispiele seien hier Handstaubsauger, Uprights oder Robotsauger genannt. Der gezeigte Staubsauger 1 besitzt ein Gehäuse 3, welches in einen Gebläseraum 4 und einen Staubsammelraum 5 unterteilt ist. Im Gebläseraum 4 ist das Antriebsaggregat in Form eines motorgetriebenen Sauggebläses 2 mit seiner Saugseite zum Staubsammelraum 5 gerichtet und erzeugt dort einen Unterdruck, der über einen angeschlossenen Saugschlauch 6 und ein Saugrohr 7 an den Saugmund eines Saugvorsatzes in Form einer Bodendüse 8 weitergegeben wird. Somit wird mit Schmutz 9 beladene Luft - durch die Pfeile 10 symbolisiert - am bearbeiteten Untergrund aufgesaugt und über Staubabscheider gereinigt. Im Ausführungsbeispiel ist dies ein Staubbeutel 11 mit nachgeordnetem Motorfilter 12 und Abluftfilter 13. Die gereinigte Luft wird wieder an die Umgebung abgegeben. Die Ansteuerung des Gebläsemotors 14 erfolgt über eine Regeleinrichtung 15, die Bestandteil einer als Kasten symbolisierten Mikroprozessor-Steuerung 17 ist. Die Regeleinrichtung 15 schaltet Leistungshalbleiter 16 und beeinflusst darüber die Aufnahmeleistung P1 des Gebläsemotors 14. Die Mikroprozessor-Steuerung 17 enthält außerdem eine Kompensationseinrichtung 18, deren Funktion später erklärt ist, und steht in Verbindung mit einer in Figur 2 dargestellten Bedien- und Anzeigeeinrichtung 20. Der Staubsauger ist außerdem mit zwei Sensoren 30 und 31 ausgestattet. Sensor 30, ein analoger Drucksensor, misst den Differenzdruck zwischen Umgebungsdruck und dem Druck im Bereich der Ankopplung des Saugschlauchs 6 am Staubsammelraum 5. Sensor 31 ist als Pitot-Sonde aufgebaut und hinter dem Motorfilter im Bereich einer nicht dargestellten Filterhalterung angeordnet.

In Figur 2 ist die Bedien- und Anzeigeeinrichtung 20 dargestellt. Seitlich sind ein Ein-AusSchalter 21 und eine Kabel-Rückhol-Taste 22 angeordnet. Zentral angeordnet ist ein Drehschalter 23, mit dem unterschiedliche Leistungsstufen 24 einstellbar sind (Leistungseinstellung). Der Drehschalter 23 und die davon in Abhängigkeit von dessen Stellung angesteuerte Regelelektronik 15 sind Mittel zum Betrieb des Antriebsaggregats (Sauggebläse 2) unterhalb seiner maximalen Aufnahmeleistung.

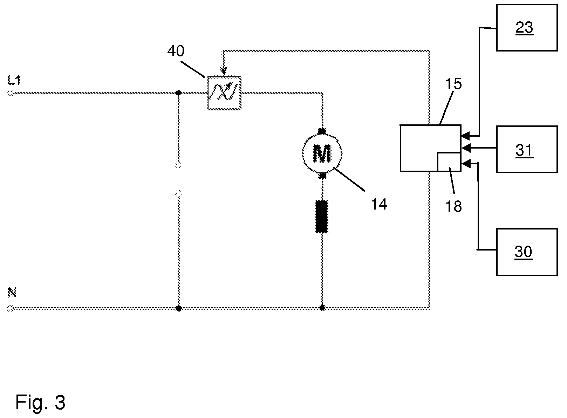

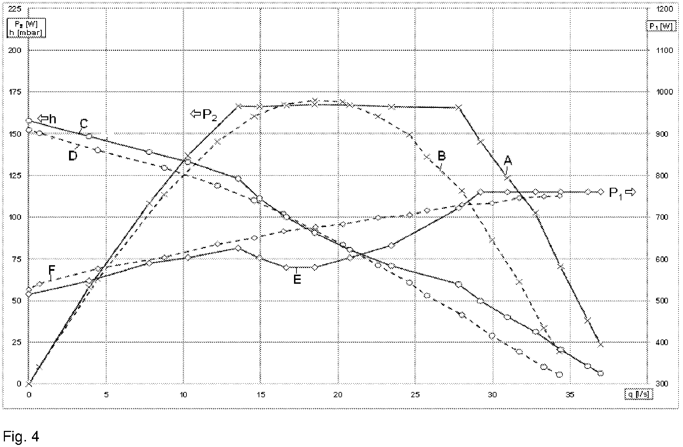

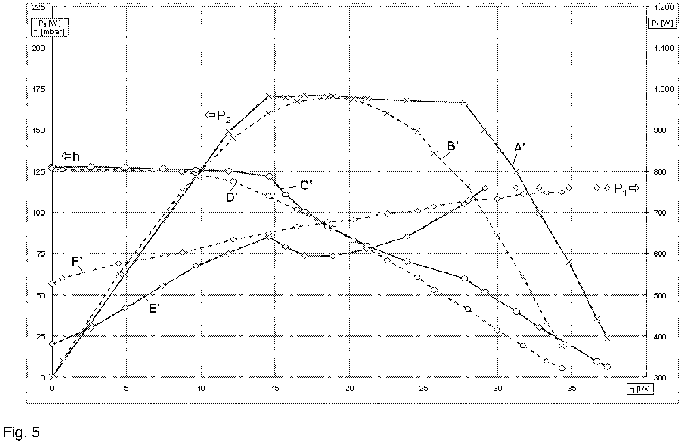

Figur 3 zeigt rein schematisch die Regeleinrichtung 15 und die zugehörigen Funktionsbauteile. Die Regeleinrichtung 15 erhält als Eingangssignale die Messwerte der beiden Sensoren 30 und 31. Der durch Sensor 30 gemessene Unterdruck im Bereich der Ankopplung des Saugschlauchs 6 am Staubsammelraum 5 wird noch um den volumenstromabhängigen Druckabfall im Saugschlauch 6 und im Saugrohr 7 korrigiert, damit die Regeleinrichtung den Unterdruck am Saugvorsatz, hier der Bodendüse 8 als erste Eingangsgröße erhält. Hierzu ist die Kompensationseinrichtung 18 vorhanden, die die gemessenen Werte des Sensors 31 in Werte umrechnet, die dem Unterdruck an der Bodendüse 8 entsprechen. Bei einer lokalen Druckmessung in der Bodendüse 8 würde dies zwar entfallen, dafür wäre jedoch zusätzlicher Verdrahtungsaufwand bis zur Bodendüse 8 nötig, der mit der erfindungsgemäßen Kompensation umgangen werden kann. Der im Saugschlauch 6 und Saugrohr 7 vorhandene Strömungswiderstand bewirkt einen weitgehend volumenstromabhängigen Druckverlust. Durch die Erfassung des Volumenstromes kann durch entsprechende, in der Regeleinrichtung hinterlegte Kennlinien, Tabellen oder Funktionen der jeweils vorherrschende Druckverlust im Saugschlauch 6 und im Saugrohr 7 berechnet und berücksichtigt werden. Die Pitot-Sonde (Sensor 31) in der Nähe des Gebläses 2 misst den Differenzdruck zwischen statischer und dynamischer Druckabnahme. Dieser korreliert mit dem Volumenstrom, der im Bereich des Sensors 31 herrscht. Als weitere Ausführung wäre z.B. auch ein Hitz-Draht, ein Druckanschluss am Gebläse, ein Schall-Anemometer oder die Herleitung des Volumenstromes aus den Motorkennlinien denk- und realisierbar. Die Regelungseinrichtung 15 errechnet aus dem Unterdruck im Bereich der Bodendüse 8 und aus dem Volumenstrom die am Saugvorsatz (Bodendüse 8) vorherrschende Saugleistung P2 und verwendet diese als Regelgröße. Die Führungsgröße, d. h. der als Saugleistung vorgegebene Sollwert P2v kann vom Bediener über den Drehschalter 23 beeinflusst werden. Dies ist an späterer Stelle in Zusammenhang mit den Figuren 4 und 5 näher beschrieben. Als Stellgröße variiert die Regeleinrichtung 15 die Aufnahmeleistung P1 des Gebläsemotors 14 durch Phasenanschnittsteuerung 40 der Netzspannung (L1, N).

Diese Figuren 4 und 5 zeigen Diagramme, in denen jeweils zwei Kennlinien desselben Bodenstaubsaugers mit der erfindungsgemäßen Regelung gegenübergestellt worden sind. Die durchgezogenen Kennlinien gehören zu einer Messreihe mit leerem Staubbeutel 11, die gestrichelten Kennlinien zu der gleichen Messreihe mit maximal gefülltem Staubbeutel 11 (400 g Normstaub). Die Kennlinien mit ihren Indizes bedeuten:
A, A', B, B' : an der Bodendüse abgegebene Saugleistung P2 [W]
C, C', D, D' : Unterdruck an der Bodendüse h [mbar]
E, E', F, F' : aufgenommene elektr. Leistung P1 [W]

Die Kennlinien B und B' entsprechen der Saugleistung P2 in Abhängigkeit vom Volumenstrom, wie sie sich bei einem gefüllten Staubbeutel einstellen. Dabei stellt sich ein für den vermessenen Staubsauger ein Maximum von ca. 170 W bei einem Volumenstrom q = 18 I/s ein. Die entsprechenden Kennlinien würden sich auch bei Staubsaugern ohne die erfindungsgemäße Saugleistungs-Regelung ergeben. Kennlinien A und A' ergeben sich bei leerem Staubbeutel. Hier greift die erfindungsgemäße Saugleistungs-Regelung. Dabei wird die erzielte Saugleistung P2 auf einen Grenzwert P2vmax eingeregelt. Dieser Wert wird von der Regelungseinrichtung 15 als Führungsgröße vorgegeben. In dem Arbeitsbereich, der einem Volumenstrombereich von q = 13 I/s bis ca. 29 I/s entspricht, wird die abgegebene Saugleistung P2 deshalb auf 170 W gehalten, dem Wert, der sich ungeregelt bei maximal gefülltem Staubbeutel einstellen würde (siehe Kennlinien B und B'). Hierzu wird die zugehörige Kennlinie E bzw. E' (Aufnahmeleistung P1) in diesem Bereich entsprechend der Regelparameter beeinflusst. Alle anderen Zustände zwischen völlig leerem und maximal gefülltem Beutel ergeben Kennlinien, die zwischen den Kennlinie A bzw. A' und Kennlinie B bzw. B' liegen und gleichfalls ausgeregelt werden.

Die Kennlinien C und C' stellen den resultierenden, sich an der Bodendüse einstellenden Unterdruck h dar. In den Kennlinien D und D' ist demgegenüber der resultierende Unterdruck an der Bodendüse aufgezeigt, wenn der Staubbeutel maximal gefüllt ist.

Die bei maximal gefülltem Staubbeutel aufgenommene Aufnahmeleistung P1 ist mit F und F' entsprechend verknüpft.

Im Diagramm gemäß Figur 5 ist eine zusätzliche Unterdruck-Limitierung in den Regelkreis für die Unterdruck-Kennlinie 3 implementiert, welche verhindert, dass der Unterdruck eine bestimmte Schwelle (hier 130 mbar), übersteigt. Die Kennlinie wird also auch im Bereich q < 13I/s durch weiteren Eingriff in die P1-Steuerung beeinflusst.

Die Diagramme sind bei einer vom Bediener mit dem Drehschalter 23 maximal eingestellten Leistungsstufe aufgenommen. Durch Verringerung der Leistungsstufe wird die

Führungsgröße P2v entsprechend verringert. Dabei wird zwar nicht mehr die bei gefülltem Beutel erreichbare maximale Saugleistung P2vmax erzielt, dies entspricht aber auch nicht mehr der Intention des Bedieners. Erfindungswesentlich ist es, dass durch den Drehschalter 23 nicht wie bei herkömmlichen Staubsaugern die Aufnahmeleistung P1, sondern die Saugleistung P2v vom Bediener vorgegeben und durch die Regelungseinrichtung im Arbeitsbereich konstant gehalten werden. Der Arbeitsbereich entspricht im Übrigen einem Volumenstrombereich, welcher bei herkömmlichen Bodenbelägen bei aufgesetzter und bewegter Bodendüse erzielt wird. Die Volumenstromwerte außerhalb des Arbeitsbereichs werden erzielt, wenn die Düse vom Boden abgehoben wird oder verstopft ist.

## Patentansprüche

1. Staubsauger (1) mit einem Antriebsaggregat (2, 14) zur Erzeugung eines Saugluftstroms, mit einem Saugvorsatz (8), mit einer zwischen dem Saugvorsatz (8) und dem Antriebsaggregat (2, 14) angeordneten Abscheidevorrichtung (11), und mit einer Regeleinrichtung (15), welche die Aufnahmeleistung (P1) des Antriebsaggregats (2, 14) als Stellgröße beeinflusst,
**dadurch gekennzeichnet,**
**dass** mit der Regeleinrichtung (15) die Aufnahmeleistung (P1) des Antriebsaggregats (2, 14) in der Art beeinflussbar ist, dass die am Saugvorsatz (8) vorherrschende Saugleistung (P2) als Regelgröße dient und auf einen vorgegebenen Saugleistungswert (P2v) regelbar ist, wobei die am Saugvorsatz (8) herrschende Saugleistung (P2) durch zwei Sensoren (30, 31) erfassbar ist, wobei strömungsmäßig der erste Sensor (30) vor der Abscheidevorrichtung (11) und der zweite Sensor (31) hinter der Abscheidevorrichtung (11) angeordnet sind, wobei der erste Sensor (30) im Bereich eines die Abscheidevorrichtung aufnehmenden Gehäuses (3) angeordnet ist, wobei eine der Regeleinrichtung (15) zugeordnete Kompensationseinrichtung den Druckabfall zwischen dem Saugvorsatz (8) und dem Einbauort des ersten Sensors (31) kompensiert.

2. Staubsauger (1) nach Anspruch 1,
**dadurch gekennzeichnet,**
**dass** mit der Regeleinrichtung (15) die am Saugvorsatz (8) herrschende Saugleistung (P2) in einem Arbeitsbereich auf einen konstanten Saugleistungswert (P2v) regelbar ist.

3. Staubsauger (1) nach Anspruch 2,
**dadurch gekennzeichnet,**
**dass** der Saugleistungswert (P2v) in seiner Höhe vom Bediener durch eine Eingabevorrichtung (23) beeinflussbar ist.

4. Staubsauger (1) nach Anspruch 3,
**dadurch gekennzeichnet,**
**dass** der maximal einstellbare Saugleistungswert (P2vmax) einem Wert entspricht, welcher sich ungeregelt bei maximal gefüllter Abscheidevorrichtung (11) einstellen würde.

5. Staubsauger (1) nach Anspruch 1,
**dadurch gekennzeichnet,**
**dass** als Sensoren (30, 31) Differenzdrucksensoren verwendet werden.

6. Staubsauger (1) nach mindestens einem der vorhergehenden Ansprüche,
**dadurch gekennzeichnet,**
**dass** als Abscheidevorrichtung (11) ein Staubbeutel (11) verwendet wird.

## Claims

1. Vacuum cleaner (1) comprising a drive unit (2, 14) for generating a suction air stream, a suction attachment (8), a separating apparatus (11) arranged between the suction attachment (8) and the drive unit (2, 14), and a control device (15) that influences the input power (P1) of the drive unit (2, 14) as the manipulated variable,
**characterised in that**
the input power (P1) of the drive unit (2, 14) can be influenced by means of the control device (15) in such a way that the suction power (P2) at the vacuum attachment (8) acts as the controlled variable and is adjustable to a predefined suction power value (P2v), it being possible to detect the suction power (P2) prevailing at the vacuum attachment (8) by means of two sensors (30, 31), the first sensor (30) being arranged upstream of the separating apparatus (11) and the second sensor (31) being arranged downstream of the separating apparatus (11) in terms of flow, the first sensor (30) being arranged in the region of a housing (3) that accommodates the separating apparatus, a compensating device associated with the control device (15) compensating for the pressure drop between the suction attachment (8) and the installation site of the first sensor (31).

2. Vacuum cleaner (1) according to claim 1,
**characterised in that**
the suction power (P2) at the suction attachment (8) can be adjusted to a constant suction power value (P2v) in a work region by means of the control device (15).

3. Vacuum cleaner (1) according to claim 2,
**characterised in that**
the level of the suction power value (P2v) can be influenced by the operator by means of an input apparatus (23).

4. Vacuum cleaner (1) according to claim 3,
**characterised in that**
the maximum adjustable suction power value (P2vmax) corresponds to a value that would be reached without any control when the separating apparatus (11) is filled to maximum capacity.

5. Vacuum cleaner (1) according to claim 1,
**characterised in that**
differential pressure sensors are used as the sensors (30, 31).

6. Vacuum cleaner (1) according to at least one of the preceding claims,
**characterised in that**
a dust bag (11) is used as the separating apparatus (11).

## Revendications

1. Aspirateur (1), avec un groupe d'entraînement (2, 14) pour la production d'un flux d'air d'aspiration, avec un adaptateur d'aspiration (8), avec un dispositif séparateur (11) disposé entre l'adaptateur d'aspiration (8) et le groupe d'entraînement (2, 14), et avec un équipement de régulation (15) qui agit sur la puissance d'entrée (P1) du groupe d'entraînement (2, 14) en tant que grandeur de réglage,
**caractérisé en ce que**
la puissance d'entrée (P1) du groupe d'entraînement (2, 14) peut être influencée avec l'équipement de régulation (15) de telle sorte que la puissance d'aspiration (P2) régnant sur l'adaptateur d'aspiration (8) sert de grandeur de réglage et peut être réglée à une valeur de puissance d'aspiration (P2v) prédéfinie, dans lequel la puissance d'aspiration (P2) régnant sur l'adaptateur d'aspiration (8) peut être détectée par deux capteurs (30, 31), dans lequel, relativement à l'écoulement, le premier capteur (30) est disposé en amont du dispositif séparateur (11) et le deuxième capteur (31) en aval du dispositif séparateur (11), dans lequel le premier capteur (30) est disposé dans la zone d'un boîtier (3) logeant le dispositif séparateur, dans lequel un équipement de compensation affecté à l'équipement de régulation (15) compense la chute de pression entre l'adaptateur d'aspiration (8) et le lieu d'implantation du premier capteur (31).

2. Aspirateur (1) selon la revendication 1,
**caractérisé en ce que**,
avec l'équipement de régulation (15), la puissance d'aspiration (P2) régnant sur l'adaptateur d'aspiration (8) peut, dans une zone de travail, être réglée à une valeur de puissance d'aspiration (P2v) constante.

3. Aspirateur (1) selon la revendication 2,
**caractérisé en ce que**
la hauteur de la valeur de puissance d'aspiration (P2v) peut être influencée par l'opérateur par un dispositif d'entrée (23).

4. Aspirateur (1) selon la revendication 3,
**caractérisé en ce que**
la valeur de puissance d'aspiration (P2vmax) pouvant être réglée au maximum correspond à une valeur qui s'établirait sans réglage pour un dispositif séparateur (11) rempli au maximum.

5. Aspirateur (1) selon la revendication 1,
**caractérisé en ce que**
des capteurs de pression différentielle sont utilisés en tant que capteur (30, 31).

6. Aspirateur (1) selon au moins l'une des revendications précédentes,
**caractérisé en ce**
**qu'**un sac à poussières (11) est utilisé en tant que dispositif séparateur (11).
